# EUROPEAN PATENT SPECIFICATION

(11) **EP 1 062 857 B1**
(45) Date of publication and mention of the grant of the patent: **13.10.2004**
(21) Application number: 00304442.7
(22) Date of filing: 25.05.2000
(51) Int. Cl.: A01D 34/86

(54) **Boom control**
Auslegersteuerung
Actionnement d'une flèche

(30) Priority: 27.05.1999 GB 9912266; 02.07.1999 GB 9915353; 31.08.1999 GB 9920377
(43) Date of publication of application: 27.12.2000
(73) Proprietor: Spearhead Machinery Ltd., Pershore, Worcestershire WR10 2DD (GB)
(72) Inventor: Lole, Christopher Martin, Pershore, Worcestershire WR10 1AJ (GB)
(74) Representative: Walker, Antony James Alexander

(56) References cited:
- EP-A- 0 664 076
- EP-A- 0 722 654
- FR-A- 2 774 551
- GB-A- 2 206 472
- GB-A- 2 251 536

## Description

The present invention relates to machinery for the control and maintenance of roadside vegetation according to the preamble of claim 1 in which a rotor carrying flails is traversed against the said vegetation by means of a boom extending transversely from a moving tractor or other vehicle.

The vegetation so cut or trimmed may be hedges, small bushes or ground vegetation on the roadside verge. The last named is the subject of the invention. It consists of mixed growth such as weeds, brambles, and coarse grass to be severed close to the ground and left as mulch.

The boom is invariably constructed as a jointed framework extending in a plane transverse to the direction of motion of the vehicle. Hydraulic cylinders regulate the reach and height of the end of the boom remote from the vehicle. A bracket at the end of the boom (the boom bracket) forms a base to which the rotor housing is attached, and a hydraulic cylinder can regulate the angular orientation of the bracket (and thereby the rotor housing) in the plane transverse to the direction of motion of the vehicle. Power from the vehicle is used to drive the rotor, for example by means of a hydraulic pump supplying pressurised fluid through pipes along the boom to a hydraulic motor on the rotor housing. Typically, the vehicle travels near the edge of a roadway, and the driver controls the reach and height of the end of the boom so as to engage the rotor assembly against the vegetation to be cut. In the case of a verge or bank, if the cut is to be regular, the rotor must follow the surface contours of underlying ground.

To maintain suitable contact of the rotor assembly against a verge or bank it is generally arranged to relieve the weight of the rotor assembly by regulating upward force at the boom bracket, rather than by regulating its position. A method in general use is to set the hydraulic pressure in the system actuating the boom by means of a hydro-pneumatic accumulator. The aim of such systems is to provide appropriate force of contact of the rotor assembly on the ground as the height of the ground varies with respect to the roadway. However, it is found that systems dependent on setting hydraulic pressure to a preferred value are effective only within a limited range of extension or elevation of the boom and of operating conditions.

Manufacturers have sought improvements and an example is EP-0644076 (Mulag) in which the support roller of the rotor housing is sprung and adapted to include one or more displacement sensors able to detect changes in the height of the cutting element above ground surface. The signal from the sensors operates a control system and continuously regulates the boom hydraulics aiming to maintain constant thrust of the boom end on the rotor housing. By similar means GB-2251536 (Turner) aims to control the height of the boom end above ground surface. Such methods involve proportional control systems, which are expensive in first cost and in maintenance, besides introducing unfamiliar technology. In practical application they can result in the vegetation being cut to an irregular height.

In many known methods of regulating contact of the rotor assembly against roadside verges productivity is impaired by interference caused by obstacles or drainage channels (gullies). These require frequent attention from the driver either in avoidance or in restoration of the break-back action they can trigger, so slowing down the rate of working.

Further, the flail rotor used for verge maintenance is used too for hedge cutting. To this end, the boom motions provided for reach, height and angular orientation of the boom bracket enable the driver to apply the flail rotor either to the verge or to the face or top of a hedge. Whatever provision is made during verge cutting for boom control must be deactivated during hedge cutting, and its components are required to withstand impact on branches and the like.

In passing, mention is made of a quite different field, crop harvesting. This differs considerably from the above in requirements for severance of vegetation. Harvesting machinery does not mount cutting systems on adjustable booms and harvesting demands its own styles and dimensions of cutting mechanism and of the handling of the cut material. However, in that industry there is a means of obtaining consistent stubble length, which we term here the floating cutter.

Examples of floating crop cutters are to be found in patents such as EP-0429381 (Kuhn) or EP-0876748 (Kuhn) where a crop working element is enabled to rest in contact with the ground because it is suspended from a support structure by means of inclined links. The link length is sufficient to allow deflection to accommodate any anticipated change of spacing between the ground and the support structure. It would be impracticable to use such a floating mechanism for the verge cutting machinery described above because considerable float range would be needed to avoid continual adjustment of the boom height by the driver. Links of that length would be unacceptable when the machinery was in the transport position or in use for hedge trimming.

Another type of floating cutter is to be found in combine harvesters, where the cutter bar is fixed on the end of a long arm, its skids resting on the ground. The arm is pivoted on the header structure. Patents such as US-3698164 (Allis-Chalmers) or US-3886718 (Talbot) describe systems that regulate the height of the header structure to control the distance between the cutting blade and the header. Both patents use electrical contacts at each end of a neutral zone. Making a contact serves to restore the system within the neutral zone. The purpose of controlling the height of the header of a combine harvester is to keep equipment and material clear of the cutter when it is deflected by ground irregularities. The floating arm holding the cutter rests on the ground, and the only effects on the cutter of adjusting the height of the header are slightly in cutting height, as it rocks on its skids, and slight change of angle. These effects are reduced to a negligible amount by using a long floating arm and pivoting it at a point nearer the hinge of the header. Where a spring is associated with the cutter bar it serves to press the skids against the ground, not to counterbalance the cutter bar's weight. Clearly, the header height control system has no operational effect on contact of the cutter bar against the ground - the cutter bar would perform its duty equally well with the control system inoperable.

In all agricultural crop harvesting devices positioning of the crop cutter to the ground need take account only of contour variations occurring between the wheelbase of the equipment and the point of cutting. Also, harvesting situations are on cultivated land - relatively smooth and level. Hence, all floating suspensions for such cutters provide for motion of little more than 100 mm. The cutter motion is referred to a support structure of stability comparable with that of the axles.

In contrast, equipment for the maintenance of hedges and roadside verges has to deal with surfaces that can be at heights, depths and spans differing from the roadway over a range of several metres. Also the cutter has to be adjustable within a swing angle range of about 270°. Inevitably, hedge and verge maintenance equipment utilises the boom. In addition to the distinction of positioning range, roadside verges can be far more irregular in contour than cultivated land. Surface irregularities of all kinds are common, including abrupt obstructions and depressions. Further causes of fluctuation occur as the carrier vehicle passes over irregularities in the road and in the transverse loading of the boom tending to deflect the vehicle's tyres or suspension. These features all require continual repositioning of the boom, as the carrier vehicle traverses the work, to a far greater degree than the motion of floating cutters in agricultural crop cutting.

This requirement for continual boom adjustment limits the rate of working of machines using known methods of boom control.

Accordingly, when in use for verge maintenance, such equipment is required to position the flail rotor as precisely, quickly and automatically as possible as it is traversed along uneven ground.

It is an object of the present invention to provide compact and economical means enabling the rotor of a boom mounted vegetation cutter to operate at a predetermined distance from the ground in which a control system regulates the height of the boom bracket in relation to the track of the carrier vehicle. It is a further object to provide means whereby the force of ground contact of the rotor assembly is less than the weight of the assembly and within a permitted range of force whatever the reach and height of the boom, and associated with which means there is provision to counter oscillation on deflection of the rotor assembly. It is yet a further object to provide for the several said means to be rendered inactive and protected from damage when the implement is to be used for duties other than verge maintenance.

According to the present invention there is provided a boom mounted vegetation cutter comprising a boom adapted in use to be connected to a carrier vehicle and to extend transversely therefrom, a rotor housing suspended from the outward end of the boom by a boom bracket, hydraulic means for lifting and lowering the boom and for adjusting the reach thereof, and control means for regulating the height of the boom bracket in relation to the surface on which the carrier vehicle travels, wherein the boom bracket is connected to the rotor housing by a connection mechanism providing for movement of the rotor housing upwardly and downwardly relative to the boom bracket within a permitted range of motion and at a constant angular attitude relative to the boom bracket and that detection means are provided to monitor the motion of the connection mechanism and to provide a signal to the control means which regulates the elevation of the boom and restores the connection mechanism within its permitted range of motion.

The path followed by the rotor housing in the permitted range of motion may be arcuate or linear.

Preferably, the rotor housing is provided with at least one ground contacting member, such as a support roller, wheel or skid set to support and maintain a cutting element within the rotor housing above the ground irrespective of movement within the connection mechanism. Preferably the ground contacting member is fixed in position relative to the rotor housing.

Conveniently, the connection mechanism comprises a parallelogram linkage. That is, it comprises two or more links of equal length each pivoted at both ends and parallel to one another, the links connecting the rotor housing to the boom bracket. As viewed from the direction of the pivot axes, the two or more links define opposite sides of a parallelogram.

When the parallelogram is a rectangle the links may be perpendicular to the plane of the boom.

Preferably, the links of the said parallelogram linkage extend from the boom bracket in a forward direction with respect to the direction of travel of the carrier vehicle on the road.

Conveniently, the permitted range of motion of the rotor housing on the parallelogram linkage is upwards from the position where the links are approximately perpendicular to the plane of the boom.

The length of the links of the said parallelogram linkage is preferably less than 300 mm. (Boom mounted equipment is invariably constructed to enable the boom to be swung behind the tractor into the transport position. It is then important that no portion of the rotor housing projects outside the wheelbase of the tractor.)

An alternative connection mechanism between the boom bracket and the rotor housing may be a slide-way.

Yet another connection mechanism between the boom bracket and the rotor housing may consist of one link arm pivoted to the rotor housing and also pivoted at the boom bracket the axes of both pivots being parallel to the area of cut of the rotor. Conveniently, the said rotor housing is provided with ground contacting members both ahead of and behind the cutting element.

Preferably the connection mechanism incorporates means of partially counterbalancing the weight of the rotor housing, for example by a spring. Positioning of such a spring in relation to the path followed in the permitted range of motion may be arranged to enhance the vertical component of the counterbalancing force as the spring length increases.

Preferably, the connection mechanism comprises damping means to reduce or prevent oscillatory motion of the rotor housing following its displacement.

Preferably the centre of gravity of the rotor housing, including the connection mechanism, is positioned substantially below the horizontal axis on which they pivot at the boom bracket. (Given substantial counterbalancing, as referred to above, for the weight of the rotor housing it is useful to ensure that the remaining force on the ground is evenly distributed between the ground contacting means. It is found that in consequence, the rotor housing easily follows ground contours without incurring tilt errors that could need sensors to detect them and further systems to correct them.)

Preferably, detection means are provided to monitor the motion of the connection mechanism and to provide a signal to the control means which regulates the elevation of the boom and restores the connection mechanism within its permitted range of motion.

Preferably the detection means consist of switches located close to each end of the permitted range of motion. Triggering of a switch causes the actuating means to shift the angle of boom elevation sufficiently to restore the connection mechanism significantly within the permitted range of motion. The switches are preferably electrical on-off switches.

Conveniently, a safety cut-off switch is provided which operates to prevent the boom from being elevated to a predetermined hazardous angle.

Each of the said actuating means may involve an electrically operated valve that causes pressurised hydraulic fluid to be admitted to or exit from the port or ports of the cylinder that causes the boom to be raised or lowered.

An example of the invention will now be described with reference to the following drawings in which:
Figure 1 shows a rotor housing attached to an articulated boom extending from a tractor, being a rear view of the tractor;
Figures 2 and 3 are end views of the rotor housing showing the connection mechanism in two different positions;
Figure 4 is a view from above of the rotor housing and the connection mechanism;
Figure 5 is a diagrammatic representation of interconnections in the control system;
Figure 6 is a side view of a further example of a connection mechanism according to the invention;
Figure 7 is a part sectional view of a portion of the connection mechanism of Figure 6; and
Figures 8 and 9 are end views of the rotor housing showing another example of the connection mechanism in two different positions.

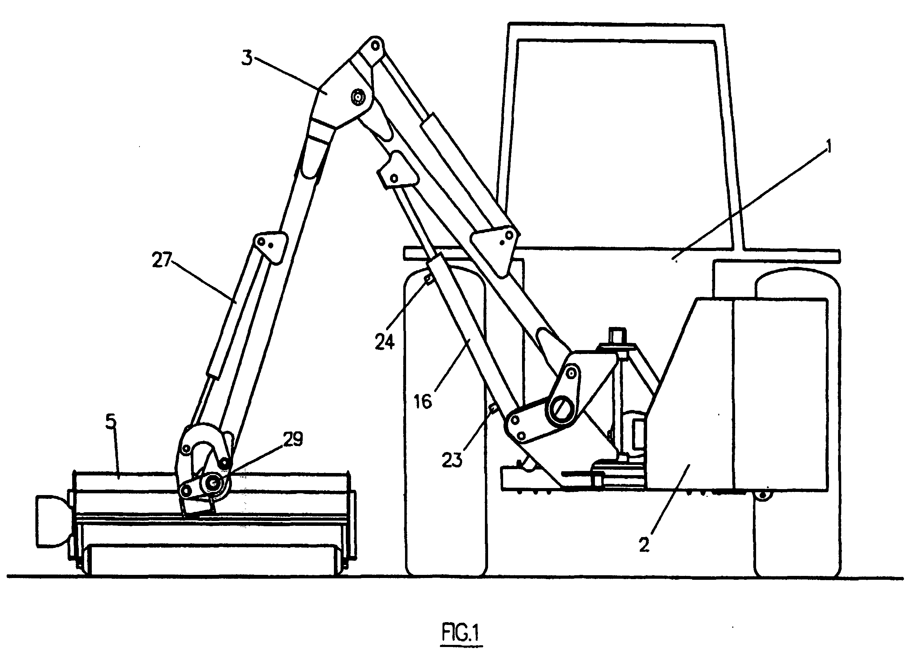

Figure 1 is a rear view of a tractor 1 on which is mounted a verge and hedge cutting machine 2 from which the boom 3 projects. The rotor housing 5 is supported from the boom 3. The hydraulic cylinder 16 determines the elevation angle of the boom 3.

In this description references to the boom bracket 6 include components of the rotor housing assembly that are rigidly attached to components generally understood to form part of the boom assembly.

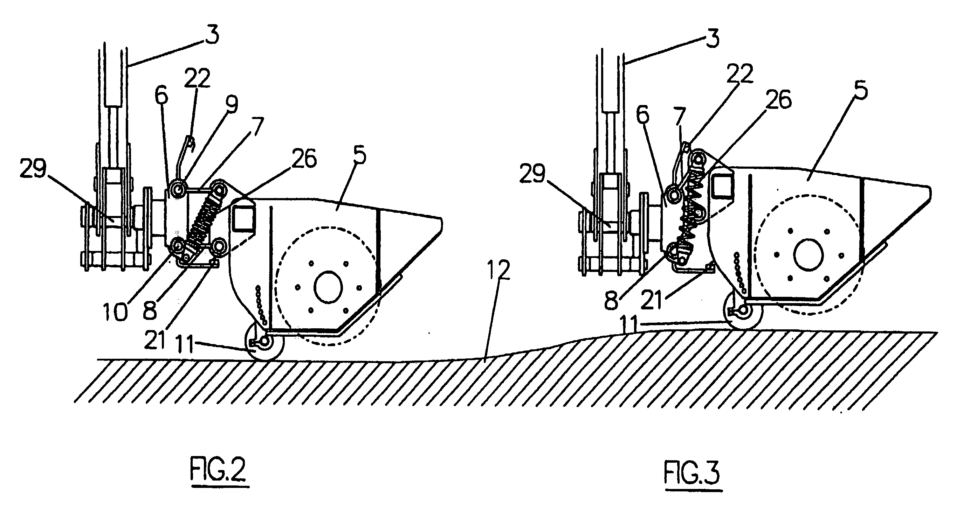

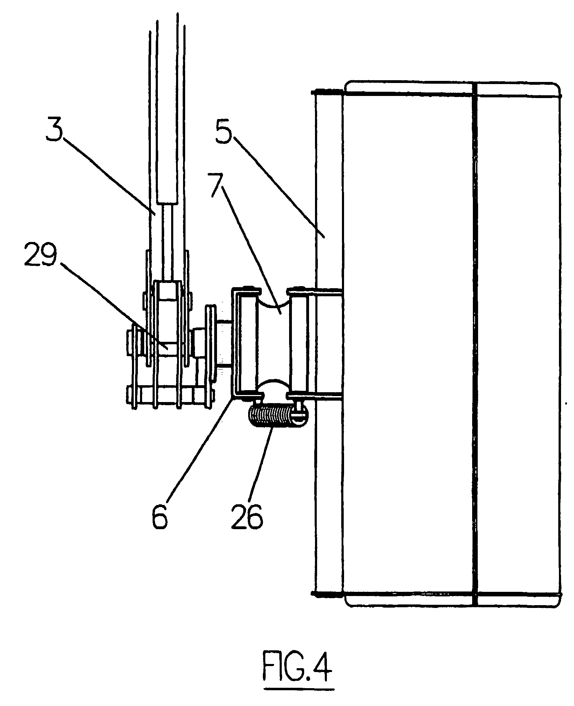

Figures 2, 3 and 4 show the boom bracket 6 at the end of the boom 3. The connection mechanism between the boom bracket 6 and the rotor housing 5 is a pair of parallel links 7 and 8. The links 7 and 8 are pivoted to the boom bracket 6 by pins 9 and 10 located in a plane that is substantially vertical when the tractor 1 is on level ground. In the present example the length of the links 7 and 8 is 150 mm.

A roller 11 supports the rotor assembly 5 by contact with the ground 12. The force of contact on the ground 12 is reduced from the weight of the rotor assembly 5 by the spring 26 which incorporates (although not shown in the figures) a device to damp vibratory motion of the connection mechanism. The abutment points of the spring 26 are chosen to provide an increasing vertical component of its thrust as the angle of the links 7 and 8 increases from the horizontal. The effect is to partially compensate for thrust reduction as spring length increases. In the example described the device to damp vibratory motion is located within the spring 26 and is a telescopic hydraulic damper.

Although the single roller 11 is positioned some distance behind the flails mounted on the rotor it defines the spacing of the flail tips from the ground 12 because the parallelogram linkage 7 and 8 ensures that the orientation of the rotor housing 5 remains unchanged as the linkage deflects.

Figure 3 illustrates a mound in the verge. The boom bracket 6 remains at the same height relative to the road, but the rotor housing 5 has been able to ride up the mound by deflecting the links 7 and 8. The cut length of the vegetation has been maintained by steady contact of the roller 11 on the ground 12.

As drawn in the figures, there is a permitted range of motion of the links 7 and 8 extending from a little below the horizontal, to an upwards-angular displacement of about 80°, as referred to the boom bracket 6.

Micro-switches 21 and 22 are provided in positions such that 21 is actuated when the links 7 and 8 are close to the horizontal end of the permitted range of motion, and 22 is actuated when links 7 and 8 are close to the upward end of the permitted range of motion.

As the rotor housing 5 and the boom bracket 6 fluctuate in relative position, the length of the spring 26 alters and its partial counterbalancing of the weight of the rotor housing 5 varies. Consequently, the force of engagement of the roller 11 against the ground 12 varies within a permitted range of force that corresponds with the permitted range of motion of the links 7 and 8. It has been found in practical trials that variations within this permitted range of force result in no detectable effect on the end result. It is effective as a simple means of maintaining the requisite ground contact.

During progress of the rotor housing 5 along small and moderate changes in ground level the links 7 and 8 fluctuate in position but stay within the permitted range of motion. Consequently the boom 3 maintains its orientation unchanged and the boom bracket 6 maintains constant height relative to the roadway. In that condition the boom pivots remain stationary and free from vibration and wear, and no hydraulic power is consumed in making adjustments to the elevation of the boom.

However, should the rotor housing 5 on its roller 11 ride up or down a ground slope sufficient to bring links 7 and 8 to an end of the permitted range of motion one of the micro-switches 21 or 22 is actuated.

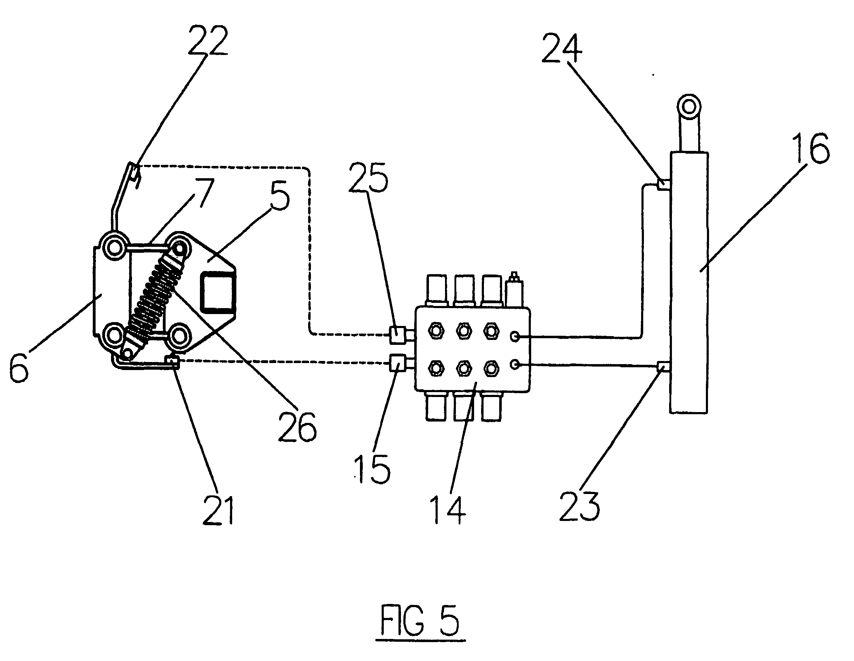

The micro-switches 21 and 22 are connected to the hydraulic control centre 14 of the machine 2. For clarity this is shown in Figure 5 separately from the machine 2.

Operation of the micro-switch 22 causes solenoid valve 25 to open. This admits pressurised hydraulic fluid to end 23 of cylinder 16 causing the boom 3 to rise. Immediately the angle of the links 7 and 8 drops below 80 degrees, releasing the micro-switch 22, and the valve 25 closes. The effect is to re-set the height of the boom bracket 6 automatically within the permitted range of motion.

Vegetation cutting continues at the new position of the boom bracket 6 until a significant change in ground level relative to the roadway again causes the links 7 and 8 to reach a limit of the permitted range of motion.

Should the links 7 and 8 actuate the micro-switch 21 at the end of the permitted range of motion the consequence is operation of solenoid valve 15, releasing pressurised hydraulic fluid from the end 23 of cylinder 16. This causes the boom 3 to be lowered sufficiently to restore the position of links 7 and 8 well within the permitted operating range. In the present example, end 24 of the cylinder 16 is connected to a low pressure vent.

In the above example of a connection mechanism according to the invention there is no provision for the operator to adjust control characteristics according to the nature of the material being cut or the geometry of the site. For example it has been found useful to increase the ground contact force of the roller 11 when the vegetation is long and woody or when there is to be prolonged operation on steep-sided banks. It has been found that variation in the ground contact force is smaller, the smaller the permitted range of motion, but of course the frequency of boom correction is increased as the range of motion is reduced. Thus, in the example now to be described provision is made for the permitted range of motion and the mean force of ground contact to be adjustable.

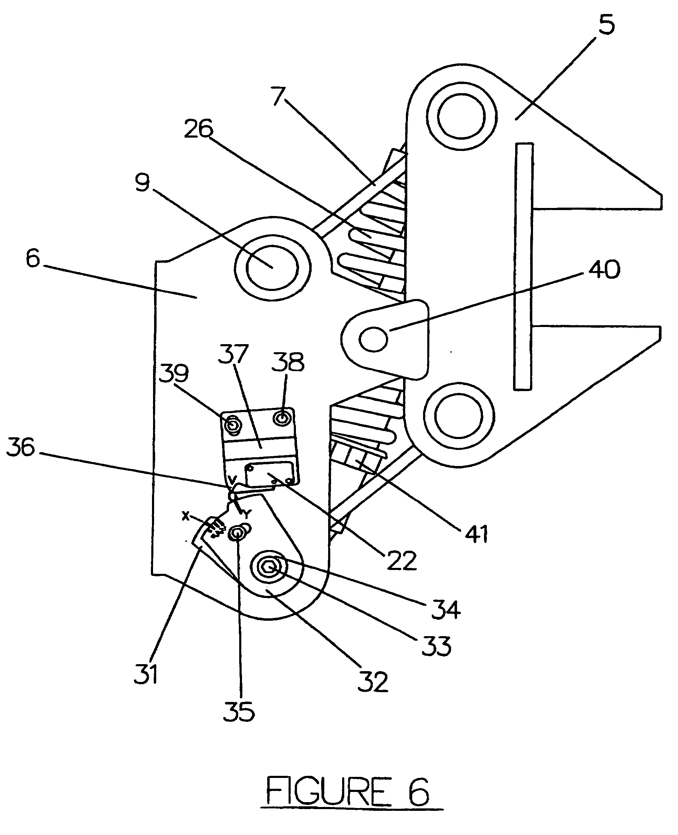

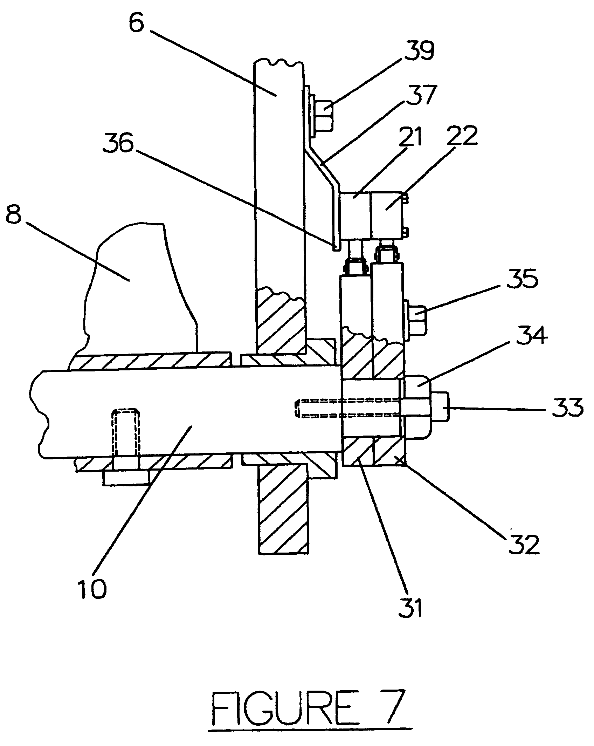

The further example differs from that already described in the mounting and actuation of the micro-switches 21 and 22, and is illustrated in Figures 6 and 7.

The two micro-switches 21 and 22 are mounted in parallel, as shown, to a bracket 37. In Figure 6 micro-switch 22 obscures 21. The position of bracket 37 is adjustable for the purpose of setting the micro-switches 21 and 22 for optimum action, being secured by screws 38 and 39 through slotted holes. The bracket 37 is formed at one end into a pointer 36, also marked as V, which is arranged to be in line with the contact rollers of the micro-switches 21 and 22.

Cam plates 31 and 32 respectively operate micro-switches 21 and 22, each cam plate being pivoted on shaft 10 of the link 8. The cam plates 31 and 32 are clamped together by a setscrew 35 that passes through a slot in cam plate 32 whereby the angle between the cam plates 31 and 32 can be adjusted and locked. By this means, a fiduciary mark X on cam plate 31 is set by the operator against an index scale marked on cam plate 32.

It will be understood by reference to Figure 6 that setting the angle between the cam plates 31 and 32 determines the distance between the cam shoulders that engage the respective micro-switches 21 and 22. Consequently the said adjustment determines the extent of the permitted range of motion of the links 7 and 8.

When the cam plates 31 and 32 have been locked together in the chosen angular relationship they are secured to the shaft 10 of link 8 by means of clamp screw 33 bearing on washer 34. However, the operator has to observe the correct orientation of clamping because it determines the portion of the deflection span of the spring 26 used by the permitted range of motion of the links 7 and 8; hence it affects the mean ground contact force of the roller 11. To assist the operator in this connection the cam plate 32 is engraved with a fiduciary mark Y to be related to the pointer 36 also marked V. The operator should ensure that when locking the cam plates 31 and 32 to the shaft 10 with the assistance of mark Y and pointer 36 that the links 7 and 8 are in a reference position determined by alignment of the locking holes 40.

In the present example, as shown in Figure 6, the spring 26 is provided with direct means of adjustment by a collar 41.

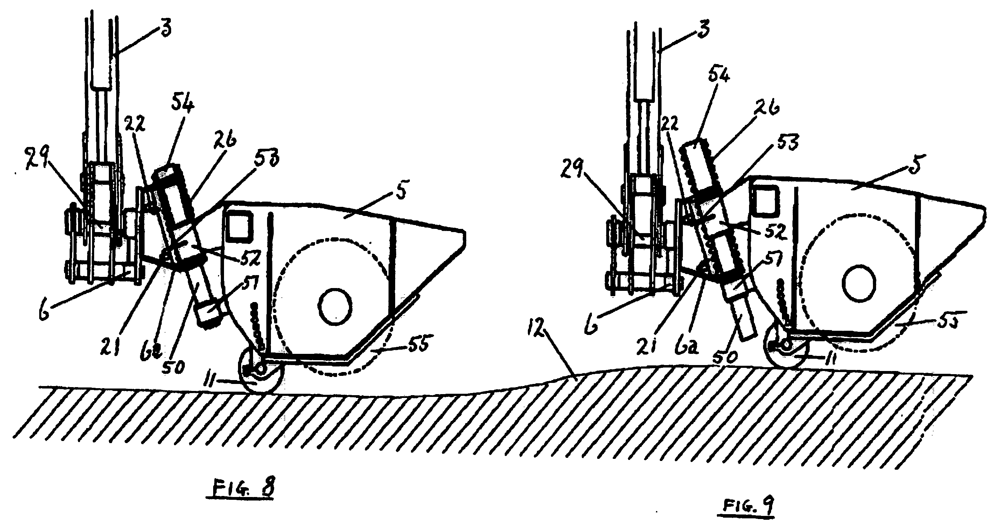

Figures 8 and 9 show an example of the invention utilising a slideway as the connection mechanism. As in the case of Figures 2 and 3 they show the connection mechanism in two conditions if displacement caused by differing distances between the boom bracket 6 and the ground 12.

The boom bracket 6 is adapted to form a support 6a to which is attached a pair of parallel guide bars 50, one of which is shown in the figures, the other being concealed from view. The guide bars 50 are set at an angle to the horizontal pivot 29 as indicated in the figures.

Each guide bar 50 has two sliding bushes, 51 and 52, which are attached to the rotor housing 5. Thus, as the rotor housing 5 is displaced upwardly or downwardly its path is constrained by the four bushes 51 and 52 sliding on the parallel guide bars 50.

As in the first example, the orientation of the rotor housing 5 remains unchanged as the connection mechanism is displaced. The pre-set cutting height of the rotor 55 is at all times the same, as defined by the contact of the roller 11 on the ground 12.

A tongue 53 is attached to one of the bushes 52. Near either end of its span of travel the tongue 53 actuates either microswitch 21 or microswitch 22.

A stirrup 54 is fitted in the space between the two bushes 52. Each leg of the stirrup 54 is attached to one of the bushes 52, and the bridge of the stirrup 54 extends above the support 6a as shown. A spring 26 is compressed between the bridge of the stirrup 54 and a part of the support 6a as indicated in Figures 8 and 9. Force exerted by the spring 26 acts to partially counterbalance the weight of the rotor housing assembly 5. Although not shown in the figures a hydraulic damper is installed within the spring 26 in order to control any tendency of the rotor housing 5 to vibrate after sudden displacement.

It will be appreciated that this example behaves in the same way as the first example described above. The span of travel of the tongue 53 between the microswitches 21 and 22 determines the permitted range of motion of the housing 5 with respect to the boom bracket 6. Contact with either microswitch 21 or 22 generates a signal that causes the hydraulic control centre 14 to adjust the boom 3 to restore the position of the connection mechanism well within the permitted range.

To demonstrate the effectiveness of the invention the carrier vehicle was driven alongside a weighbridge, allowing the ground roller 11 to rest on the weighbridge. Thereby, the ground contact force was measured as the carrier vehicle progressed. It was demonstrated that the ground contact force was independent of the length of extension of the boom. When the wheels of the carrier vehicle passed over obstructions arranged to cant the vehicle it was demonstrated that the ground contact pressure of the rotor head was independent of the angle of the boom.

Repeated passes over the weighbridge using differing settings of the cam plates 31 and 32 confirmed the validity of the index markings on the cam plates.

In considering control of the boom 3 in relation to differences in height between the verge and the roadway it should be noted that similar effects and responses occur when the verge and roadway are at the same level but surface irregularities cause the tractor 1 to tilt sideways. Similarly, extension or changes in loading of the boom 3 can deflect the tractor 1 according to the compliance of its tyres. In any such action the consequence is a shift in the distance between the boom bracket 6 and the verge 12. If the shift causes the parallelogram linkage 7 and 8 to reach one of the micro-switches 21 or 22 then the cylinder 16 is immediately actuated to adjust the boom 3 to compensate for tilt of the tractor 1.

It is a simple matter to arrange the electrical connections so that the driver can switch off the control system described when he wishes to gain full manual control of the boom 3, for example, when the verge is interrupted by a farm entrance road.

The advantages of this single speed floating control system, as can be seen from the examples described, are as follows. The cutting element always operates at the height set by the ground roller 11, which contacts the ground with a force substantially less than the weight of the rotor assembly 5. Much of the operation of the implement takes place within a movement zone where no corrective action to the boom system is required. When corrective action is required, the boom is shifted in one action by a fixed amount. The system uses simple components and is easy to maintain. Its compactness means that the equipment can be carried in the transport position behind the tractor without difficulty and can be used for hedge cutting merely by locking the linkage mechanism.

It has been found that the counterbalancing spring 26 and the associated damper can be chosen to cause the rate of fall of the rotor housing 5 to be slow enough to overcome operational difficulty caused by drainage channels. These are often cut across verges to drain surface water into a ditch. The rotor housing can cross them unimpeded because it drops a relatively small distance within its permitted range of motion during the time taken to cross the drainage channel. In previously known systems the rotor housing can be trapped by a drainage channel, thereby actuating the break-back mechanism of the boom.

The break-back mechanism of the boom of typical verge cutting equipment is based on constructions in which the boom assembly can pivot about an upright axis when the rotor housing is forcibly pushed backwards relative to the carrier vehicle. The force necessary to so push back the rotor housing is determined by a pressure sensitive valve fitted to a hydraulic ram maintaining the boom in the plane transverse to the direction of motion of the carrier vehicle. Usually, fluid so expelled from that hydraulic ram is fed to the boom-elevating cylinder 16, causing the rotor housing to rise as well as move backwards.

Using apparatus according to the present invention the action of the break-back mechanism is improved. Because the full weight of the boom 3, to which is added the compressive force in the spring 26, is directly coupled to the piston of cylinder 16, a break-back event is always followed by immediate restoration of the rotor housing 5 to normal duty.

To maximise the ability to cross abrupt depressions the spring 26 should counterbalance a large proportion of the weight of the rotor housing 5. In that condition it is advantageous to arrange for the centre of gravity of the rotor housing assembly to lie vertically below the horizontal pivot 29 (Figure 1) about which the boom bracket 6 can be angled.

In accordance with known practice the rotor housing 5 has head angling provision about pivot 29 to enable it to maintain contact with the surface of a verge sloping up or down from the roadway. The boom bracket 6 is controllable by a double-acting hydraulic cylinder 27 (Figure 1). When the verge cutting control system described above is in action both ports of the cylinder 27 are connected to drain, leaving the boom bracket 6 free to tilt according to settlement of the roller 11 of the rotor housing 5 on the ground.

When the verge cutting control system is switched off, hydraulic control is restored to cylinder 27 and boom bracket 6, and the driver can then align the cutting head 5 against a surface such as a hedge face.

Also, of course, in changing from verge cutting to hedge cutting the driver has to adjust the position of the roller 11 and clamp the parallelogram linkage 7 and 8 to prevent its deflection. For this purpose, in the present example, we provide a locking attachment (pins in the holes 40 in Figure 6) at the side of the linkage.

As regards means of clamping the linkage it will be appreciated that alternatives would be equally effective, including devices operated from the cab or automatically with restoration of hydraulic automatic control to the cylinder 6.

If it is required to adapt the equipment for extensive hedge-cutting duty alone, the connection mechanism from the boom bracket 6 to the rotor housing 5 may be designed to be replaceable by an item of fixed dimensions.

In the example described a locking pin may be fitted into the holes 40 (Figure 6) to lock the associated connection mechanism. It will be appreciated that before he fits the locking pin the operator must inactivate the control system and preferably cut off the mechanical power input to the verge cutting machine 2. It will be noted that when the locking pin is in position the switch 22 is held closed. Accordingly, the operator should not re-activate the control system and turn on the power while the locking pin is in position. If this happened inadvertently, the hydraulic cylinder 16 would extend to its fullest extent, raising the boom to its upper limit and possibly causing damage, maybe injury. In particular, hazard would arise if the cutting head 5 were close to the tractor 1.

However, an extra switch (not shown) is provided that cuts off the control system before the boom 3 can be elevated to a hazardous angle. The switch is actuated at a certain elevation of the first arm of the boom 3, i.e. the arm closer to the machine 2. The switch is adjusted to operate when the cutting head 5 is close to the tractor 1 and the cutting head 5 is level with the top of the road wheels shown in Figure 1. Clearly, when the cutting head 5 is some distance away from the tractor 1 it can be raised to a greater height without the first arm of the boom 3 reaching the point of actuation of the extra switch.

The vegetation cutter of the present invention has proved effective in maintaining ground contact force within a required range whatever the distance, height and slope of the verge. That, together with the success in crossing drainage channels and the rapid auto-return from break-back facilitates verge cutting at a greater speed than known systems. It has also been found that using the vegetation cutter of the present invention that the driver can pay increased attention to driving as distinct from continually adjusting the boom. There are improvements in both operating costs and safety.

It will be appreciated that the present invention is applicable to other types of rotor arrangement than that in the figures. It is applicable, for example, to a vertical axis flail head.

Although it is preferred to use a single speed floating control system to regulate the elevation of the boom 3, it will be understood that the invention can utilise other means of detection of the position of the connection mechanism within its permitted range. Signals from those detectors can correct the elevation of the boom 3 by applying other types of control than that given in the example above. For example, a displacement transducer could signal the position of the connection mechanism, and its output could operate a proportional controller to regulate the elevation of the boom 3 continuously.

It will be understood that elaborations known in the art may be used in conjunction with the invention, for example, sensors ahead of or at the ends of the rotor housing 5 to signal the presence of obstructions (such as unsafe proximity to the wheel of the carrier vehicle 1), or skids or rollers positioned to deflect the rotor housing 5 from obstacles.

The mounting and construction of the boom 3 may be such that it can be swung to either side of the carrier vehicle and the rotor housing 5 arranged to face forwardly on whichever side of the vehicle it is positioned.

## Claims

1. A boom mounted vegetation cutter comprising a boom (3) adapted in use to be connected to a carrier vehicle (1) and to extend transversely therefrom, a rotor housing (5) suspended from the outward end of the boom (3) by a boom bracket (6), hydraulic means for lifting and lowering the boom (3) and for adjusting the reach thereof, and control means for regulating the height of the boom bracket (6) in relation to the surface on which the carrier vehicle (1) travels, the boom bracket (6) being connected to the rotor housing (5) by a connection mechanism (7, 8) providing for movement of the rotor housing (5) upwardly and downwardly relative to the boom bracket (6) within a range of motion and at a constant angular attitude relative to the boom bracket, **characterised in that** the upward and downward movement is whithin a permitted range of motion and that detection means (21, 22) are provided to monitor the motion of the connection mechanism (7, 8) and to provide a signal to the control means which regulates the elevation of the boom (3) and restores the connection mechanism (7, 8, 26) within its permitted range of motion.

2. A boom mounted vegetation cutter according to claim 1, wherein the connection mechanism (7, 8) comprises two or more links of equal length each pivoted at both ends and parallel to one another, the links connecting the rotor housing (5) to the boom bracket (6).

3. A boom mounted vegetation cutter according to claim 2, wherein the said links (7, 8) extend from the boom bracket (6) in a forward direction with respect to the direction of travel of the carrier vehicle (1) on the road.

4. A boom mounted vegetation cutter according to claim 1, wherein the connection mechanism between the boom bracket (6) and the rotor housing (5) comprises a slide-way.

5. A boom mounted vegetation cutter according to claim 1, wherein the connection mechanism between the boom bracket (6) and the rotor housing (5) comprises a single link arm pivoted to the rotor housing and also pivoted at the boom bracket, the axes of both pivots being parallel to the area of cut of the rotor housing (5).

6. A boom mounted vegetation cutter according to any preceding claim, wherein the rotor housing (5) is provided with a ground contacting member (11) to support and maintain a cutting element within the rotor housing (5) at a constant predetermined height above the ground irrespective of movement within the connection mechanism (7, 8).

7. A boom mounted vegetation cutter according to claim 6, wherein its ground contacting member is fixed in position relative to the rotor housing.

8. A boom mounted vegetation cutter according to claim 6 or 7, wherein the said rotor housing (5) is provided with ground contacting members (11) both ahead of and behind the cutting element of the rotor housing (5).

9. A boom mounted vegetation cutter according to any preceding claim, wherein the connection mechanism comprises means (26) of partially counterbalancing the weight of the rotor housing (5).

10. A boom mounted vegetation cutter according to claim 8 or 9, wherein the counterbalance means comprises a spring.

11. A boom mounted vegetation cutter according to claim 9 or 10, wherein the connection mechanism comprises damping means to reduce or prevent oscillatory motion of the rotor housing (5) following its displacement.

12. A boom mounted vegetation cutter according to any preceding claim, wherein the centre of gravity of the rotor housing (5) including the connection mechanism (7, 8, 26), is positioned substantially below the horizontal axis on which they pivot at the boom bracket (6).

13. A boom mounted vegetation cutter according to claim 12, wherein the detection means consist of switches (21, 22) located close to each end of the permitted range of motion.

14. A boom mounted vegetation cutter according to any preceding claim comprising a safety cut-off switch which operates to prevent the boom from being elevated to a predetermined hazardous angle.

## Patentansprüche

1. An einem Ausleger angebrachter Pflanzenschneider, der einen Ausleger (3), welcher ausgelegt ist, um in Gebrauch mit einem Trägerfahrzeug (1) verbunden zu werden und sich quer von diesem zu erstrecken, ein Rotorgehäuse (5), das von dem äußeren Ende des Auslegers (3) durch einen Auslegerträger (6) aufgehängt ist, Hydraulikmittel zum Anheben und Absenken des Auslegers (3) und zum Anpassen der Reichweite desselben, und Steuermittel zum Regeln der Höhe des Auslegerträgers (6) in Bezug zu der Oberfläche aufweist, auf der das Trägerfahrzeug (1) fährt, wobei der Auslegerträger (6) mit dem Rotorgehäuse (5) durch einen Verbindungsmechanismus (7, 8) verbunden ist, der für Bewegung des Rotorgehäuses (5) aufwärts und abwärts in bezug zu dem Auslegerträger (6) innerhalb eines Bewegungsbereichs und bei einer konstanten Winkellage in bezug zu dem Auslegerträger sorgt, **dadurch gekennzeichnet, dass** die Aufwärts- und Abwärtsbewegung innerhalb eines zulässigen Bewegungsbereichs liegt, und dass Detektionsmittel (21, 22) vorgesehen sind, um die Bewegung des Verbindungsmechanismus (7, 8) zu überwachen und dem Steuermittel ein Signal zu liefern, das die Höhe des Auslegers (3) regelt und den Verbindungsmechanismus (7, 8, 26) in seinen zulässigen Bewegungsbereichs zurückführt.

2. An einem Ausleger angebrachter Pflanzenschneider nach Anspruch 1, bei dem der Verbindungsmechanismus (7, 8) zwei oder mehr Gelenke gleicher Länge aufweist, die an beiden Enden und parallel zueinander geschwenkt werden, wobei die Gelenke das Rotorgehäuse (5) mit dem Auslegerträger (6) verbinden.

3. An einem Ausleger angebrachter Pflanzenschneider nach Anspruch 2, bei dem die genannten Gelenke (7, 8) sich von dem Auslegerträger (6) in einer Vorwärtsrichtung in bezug zu der Fahrtrichtung des Trägerfahrzeugs (1) auf der Straße erstrecken.

4. An einem Ausleger angebrachter Pflanzenschneider nach Anspruch 1, bei dem der Verbindungsmechanismus zwischen dem Auslegerträger (6) und dem Rotorgehäuse (5) eine Gleitbahn aufweist.

5. An einem Ausleger angebrachter Pflanzenschneider nach Anspruch 1, bei dem der Verbindungsmechanismus zwischen dem Auslegerträger (6) und dem Rotorgehäuse (5) einen einzelnen Gelenkarm aufweist, der zu dem Rotorgehäuse geschwenkt wird und auch an dem Auslegerträger geschwenkt wird, wobei die Achsen beider Schwenkungen parallel zu dem Schneidbereich des Rotorgehäuses (5) sind.

6. An einem Ausleger angebrachter Pflanzenschneider nach einem vorhergehenden Anspruch, bei dem das Rotorgehäuse (5) mit einem Bodenberührungselement (11) versehen ist, um ein Schneidelement innerhalb des Rotorgehäuses (5) auf einer konstanten vorbestimmten Höhe über dem Boden ungeachtet der Bewegung innerhalb des Verbindungsmechanismus (7, 8) zu halten.

7. An einem Ausleger angebrachter Pflanzenschneider nach Anspruch 6, bei dem sein Bodenberührungselement in Position in bezug zu dem Rotorgehäuse fixiert wird.

8. An einem Ausleger angebrachter Pflanzenschneider nach Anspruch 6 oder 7, bei dem das genannte Rotorgehäuse (5) mit Bodenberührungselementen (11) sowohl vor als auch hinter dem Schneidelement des Rotorgehäuses (5) versehen ist.

9. An einem Ausleger angebrachter Pflanzenschneider nach einem vorhergehenden Anspruch, bei dem der Verbindungsmechanismus Mittel (26) zum teilweisen Ausbalancieren des Gewichts des Rotorgehäuses (5) aufweist.

10. An einem Ausleger angebrachter Pflanzenschneider nach Anspruch 8 oder 9, bei dem das Ausbalancierungsmittel eine Feder aufweist.

11. An einem Ausleger angebrachter Pflanzenschneider nach Anspruch 9 oder 10, bei dem der Verbindungsmechanismus Dämpfungsmittel aufweist, um Oszillationsbewegung des Rotorgehäuses (5) nach seiner Verschiebung zu reduzieren oder zu verhindern.

12. An einem Ausleger angebrachter Pflanzenschneider nach einem vorhergehenden Anspruch, bei dem die Schwerkraftmitte des den Verbindungsmechanismus (7, 8, 26) einschließenden Rotorgehäuses (5) im wesentlichen unter der horizontalen Achse positioniert ist, an der sie an dem Auslegerträger (6) schwenken.

13. An einem Ausleger angebrachter Pflanzenschneider nach Anspruch 12, bei dem die Detektionsmittel aus Schaltern (21, 22) bestehen, die nahe jedem Ende des zulässigen Bewegungsbereichs angeordnet sind.

14. An einem Ausleger angebrachter Pflanzenschneider nach einem vorhergehenden Anspruch, der einen Sicherungsausschalter aufweist, der arbeitet, um Anhebung des Auslegers auf einen vorbestimmten gefährlichen Winkel zu verhindern.

## Revendications

1. Lame de fauchage de végétation montée sur flèche, comprenant une flèche (3) adaptée, en utilisation, pour être raccordée à un véhicule transporteur (1) et pour s'étendre dans un plan transversal à partir de celui-ci, un carter de rotor (5) qui est suspendu à partir de l'extrémité extérieure de la flèche (3) grâce à une console de flèche (6), un moyen hydraulique pour relever et abaisser la flèche (3) et pour ajuster la portée de celle-ci, et un moyen de commande servant à réguler la hauteur de la console de flèche (6) par rapport à la surface sur laquelle le véhicule transporteur (1) se déplace, la console de flèche (6) étant raccordée au carter de rotor (5) à l'aide d'un mécanisme de raccordement (7, 8) permettant d'assurer un mouvement vers le haut et vers le bas du carter de rotor (5) par rapport à la console de flèche (6) dans une plage de mouvement et à une position angulaire constante par rapport à la console de flèche, **caractérisée en ce que** le mouvement vers le haut et vers le bas est effectué dans une plage de mouvement admissible, et que des moyens de détection (21, 22) sont prévus pour surveiller le mouvement du mécanisme de raccordement (7, 8) et pour fournir un signal au moyen de commande lequel régule l'élévation de la flèche (3) et ramène le mécanisme de raccordement (7, 8, 26) dans les limites de sa plage de mouvement admissible.

2. Lame de fauchage de végétation montée sur flèche, selon la revendication 1, dans laquelle le mécanisme de raccordement (7, 8) comprend deux ou plusieurs tringles de longueur égale, chacune étant munie d'un pivot aux deux extrémités et étant parallèle l'une à l'autre, les tringles assurant le raccordement entre le carter du rotor (5) et la console de flèche (6).

3. Lame de fauchage de végétation montée sur flèche, selon la revendication 2, dans laquelle lesdites tringles (7, 8) s'étendent à partir de la console de flèche (6) dans une direction Avant par rapport au sens de déplacement du véhicule transporteur (1) sur la route.

4. Lame de fauchage de végétation montée sur flèche, selon la revendication 1, dans laquelle le mécanisme de raccordement entre la console de flèche (6) et le carter de rotor (5) comprend une glissière.

5. Lame de fauchage de végétation montée sur flèche, selon la revendication 1, dans laquelle le mécanisme de raccordement entre la console de flèche (6) et le carter de rotor (5) comprend un seul bras de tringle qui a une articulation à pivot avec le carter du rotor et également une articulation à pivot avec la console de flèche, les axes des deux pivots étant parallèles à la zone de coupe du carter de rotor (5).

6. Lame de fauchage de végétation montée sur flèche, selon l'une quelconque des revendications précédentes, dans laquelle le carter de rotor (5) est pourvu d'un élément de contact de sol (11) afin de soutenir et de maintenir un élément de coupe à l'intérieur du carter de rotor (5) à une hauteur constante prédéterminée au-dessus du sol, indépendamment du mouvement à l'intérieur du mécanisme de raccordement (7, 8).

7. Lame de fauchage de végétation montée sur flèche, selon la revendication 6, dans laquelle son élément de contact de sol occupe une position fixe par rapport au carter de rotor.

8. Lame de fauchage de végétation montée sur flèche, selon la revendication 6 ou 7, dans laquelle ledit carter de rotor (5) est pourvu d'éléments de contact de sol (11) situés à la fois devant et derrière l'élément de coupe du carter de rotor (5).

9. Lame de fauchage de végétation montée sur flèche, selon l'une quelconque des revendications précédentes, dans laquelle le mécanisme de raccordement comprend un moyen (26) permettant de contrebalancer partiellement le poids du carter de rotor (5).

10. Lame de fauchage de végétation montée sur flèche, selon la revendication 8 ou 9, dans laquelle le moyen d'équilibrage comprend un ressort.

11. Lame de fauchage de végétation montée sur flèche, selon la revendication 9 ou 10, dans laquelle le mécanisme de raccordement comprend un moyen d'amortissement destiné à réduire ou à empêcher tout mouvement oscillatoire du carter de rotor (5) à la suite de son déplacement.

12. Lame de fauchage de végétation montée sur flèche, selon l'une quelconque des revendications précédentes, dans laquelle le centre de gravité du carter de rotor (5), y compris le mécanisme de raccordement (7, 8, 26), est positionné essentiellement en dessous de l'axe horizontal sur lequel ils pivotent au niveau de la console de flèche (6).

13. Lame de fauchage de végétation montée sur flèche, selon la revendication 12, dans laquelle les moyens de détection sont constitués d'interrupteurs (21, 22) qui sont positionnés à proximité de chaque extrémité de la plage de mouvement admissible.

14. Lame de fauchage de végétation montée sur flèche, selon l'une quelconque des revendications précédentes, comprenant un interrupteur de coupure de sécurité lequel opère de façon à empêcher toute élévation de la flèche à un angle dangereux prédéterminé.
